# EUROPÄISCHE PATENTSCHRIFT

(11) **EP 0 826 534 B1**
(45) Veröffentlichungstag und Bekanntmachung des Hinweises auf die Patenterteilung: **23.07.2003**
(21) Anmeldenummer: 97113608.0
(22) Anmeldetag: 07.08.1997
(51) Int. Cl.: B60J 3/02

(54) **Sonnenblende für Fahrzeuge**
Sun visor for vehicles
Pare-soleil pour véhicules

(30) Priorität: 03.09.1996 DE 19635684
(43) Veröffentlichungstag der Anmeldung: 04.03.1998
(73) Patentinhaber: Johnson Controls Interiors GmbH & Co. KG, 42285 Wuppertal (DE)
(72) Erfinder: Viertel, Lothar, 66802 Altforweiler (DE); Welter, Patrick, 57730 La Chambre (FR)
(74) Vertreter: Hemmelmann, Klaus

(56) Entgegenhaltungen:
- EP-A- 0 002 656
- EP-A- 0 562 085
- EP-A- 0 652 099
- DE-A- 3 813 699
- US-A- 4 988 140
- US-A- 5 054 839

## Beschreibung

Die Erfindung bezieht sich auf eine Sonnenblende für Fahrzeuge mit einem hohlen, als Blasformkörper ausgebildeten Sonnenblendenkörper, der eine annähernd rechteckige Form aufweist und in einem Eckbereich ein eingelagertes Lagergehäuse mit einer Lagerbohrung für die einendige Lagerung einer anderendig von einem Lagerböckchen aufgenommenen Sonnenblendenachse trägt, welche von einer vom Lagergehäuse aufgenommenen Rastfeder geklemmt wird, der weiterhin am dem Lagergehäuse abgewandten Endbereich einen mit der Sonnenblendenachse eine Klappachse bildenden Gegenlagerstift aufweist, der ferner an einer Breitseite mit einer wannenförmigen Vertiefung zur Aufnahme eines Ergänzungsbauteils, wie eine Spiegelbaueinheit ausgebildet ist und der schließlich mit Versteifungssicken versehen ist.

In der EP 0 562 085 B1 ist eine Sonnenblende für Kraftfahrzeuge gezeigt, die einen hohlen, als Blasformkörper ausgebildeten Sonnenblendenkörper aufweist. In einem Eckbereich des Sonnenblendenkörpers befindet sich eine Haltefeder zur Aufnahme eines Abschnitts einer Sonnenblendenachse. In einer Breitseite des Sonnenblendenkörpers befindet sich eine wannenförmige Vertiefung zur Aufnahme eines Spiegels. Der Sonnenblendenkörper ist von einer hüllenartigen äußeren Abdeckung umgeben. Damit der Sonnenblendenkörper der bekannten Sonnenblende eine hohe mechanische Festigkeit erhält, sind die inneren gegenüberliegenden Seiten des Sonnenblendenkörpers mit einer Vielzahl von Verstärkungsrippen versehen, die der Innenseite des Sonnenblendenkörpers zugewandt sind und die durch stanzen von der Außenseite des Sonnenblendenkörpers her hergestellt sind, wobei jede Rippe hohl ist und an der Außenoberfläche der entsprechenden Seite des Sonnenblendenkörpers eine kleine Bohrung festlegt. Die durch die Rippen gebildeten sichtbaren Öffnungen am Sonnenblendenkörper werden durch die hüllenartige Abdeckung verdeckt.

Der vorliegenden Erfindung liegt nun die Aufgabe zugrunde, die Herstellung einer Sonnenblende der eingangs genannten Art zu vereinfachen und insbesondere Vorsorge dafür zu treffen, daß der Sonnenblendenkörper nicht mehr notwendigerweise mit einem Umhüllungsmaterial verkleidet werden muß.

Zur Lösung dieser Aufgabe ist erfindungsgemäß vorgesehen, daß die Seitenwände der wannenförmigen Vertiefung mit einem durch einen stufenförmigen Absatz gebildeten umlaufenden Auflageflansch ausgeführt sind, daß die Versteifungssicken ausschließlich im Boden der wannenförmigen Vertiefung angeordnet sind, und zwar als diagonal verlaufende, sich kreuzende Versteifungsrippen, die sich an der Innenwandung der benachbarten Breitseite des Sonnenblendenkörpers abstützen und daß sich im Boden der wannenförmigen Vertiefung Löcher zur Aufnahme von Befestigungselementen des Ergänzungsbauteils befinden.

Es hat sich in überraschender Weise gezeigt, daß durch den stufenförmigen Absatz und durch die ausschließlich im Boden der wannenförmigen Vertiefung ausgebildeten Versteifungssicken ein Sonnenblendenkörper geschaffen werden konnte, der den technischen Anforderungen, wie durch Testreihen festgestellt werden konnte, in jeder Hinsicht vollauf genügt. Die Löcher im Boden der wannenförmigen Vertiefung dienen zur besonders einfachen Festlegung eines Ergänzungsbauteils und das Ergänzungsbauteil entzieht, ungeachtet sonstiger Aufgaben und Funktionen die Löcher und Versteifungssicken den Blicken eines Betrachters. Damit weist ein Sonnenblendenkörper der erfindungsgemäßen Sonnenblende eine glatte, unterbrechungsfreie Oberfläche auf, so daß dem Grunde nach, insbesondere bei Einsatz beliebig eingefärbter Kunststoffolien, auf eine Umhüllung des Sonnenblendenkörpers mit Umhüllungsmaterial verzichtet werden kann. Andererseits können natürlich die Sonnenblendenkörper auch in herkömmlicherweise umhüllt werden, falls dies von der Abnehmerschaft gewünscht wird.

Die Versteifungssicken sind stoffschlüssig mit der Innenwandung der benachbarten Breitseite des Sonnenblendenkörpers verbunden. Dies kann in einfachster Weise durch die Verformungswärme beim Blasformen des Sonnenblendenkörpers erzielt werden.

Eine Weiterbildung der Erfindung sieht vor, daß eine Seitenwand der wannenförmigen Vertiefung eine zu öffnende Zone aufweist und daß sich zwischen dieser Zone und der Lagerbohrung des Lagergehäuses ein Durchgangskanal zum Durchführen von elektrischen Versorungsleitungen erstreckt. Diese Ausgestaltung ist besonders wichtig, wenn als Ergänzungsbauteil eine mit einer elektrischen Beleuchtungseinrichtung ausgerüstete Spiegelbaueinheit in die wannenförmige Vertiefung des Sonnenblendenkörpers eingesetzt werden soll.

Der Durchgangskanal besteht zweckmäßigerweise aus einem rohrförmigen Ansatz am Lagergehäuse.

Als Ergänzungsbauteil kommt neben der erwähnten mit einer elektrischen Beleuchtungseinrichtung ausgestatteten Spiegelbaueinheit ein Verschlußdeckel ebenso in Betracht wie ein von einem Rahmen eingefaßter Spiegel.

Der Verschlußdeckel, der Rahmen oder die Spiegelbaueinheit kann mit rückseitig angeordneten, z. B. harpunenartig gestalteten Verankerungselementen ausgerüstet sein, so daß eine Anordnung des jeweiligen Ergänzungsbauteils in der wannenförmigen Vertiefung durch eine besonders schnell und einfach durchführbare Steckmontage erfolgen kann.

Eine weitere Ausgestaltung der Erfindung sieht vor, daß für die Halterung des Ergänzungsbauteils ein Adapterrahmen mit ober- und unterseitigen Befestigungselementen eingesetzt wird. Dies hat den besonderen Vorteil, daß für die Bestückung des neuen Sonnenblendenkörpers vorhandene Standardbauteile zur Verwendung kommen können.

Ein Ausführungsbeispiel der Erfindung wird im folgenden anhand der Zeichnungen näher erläutert, und es zeigen:

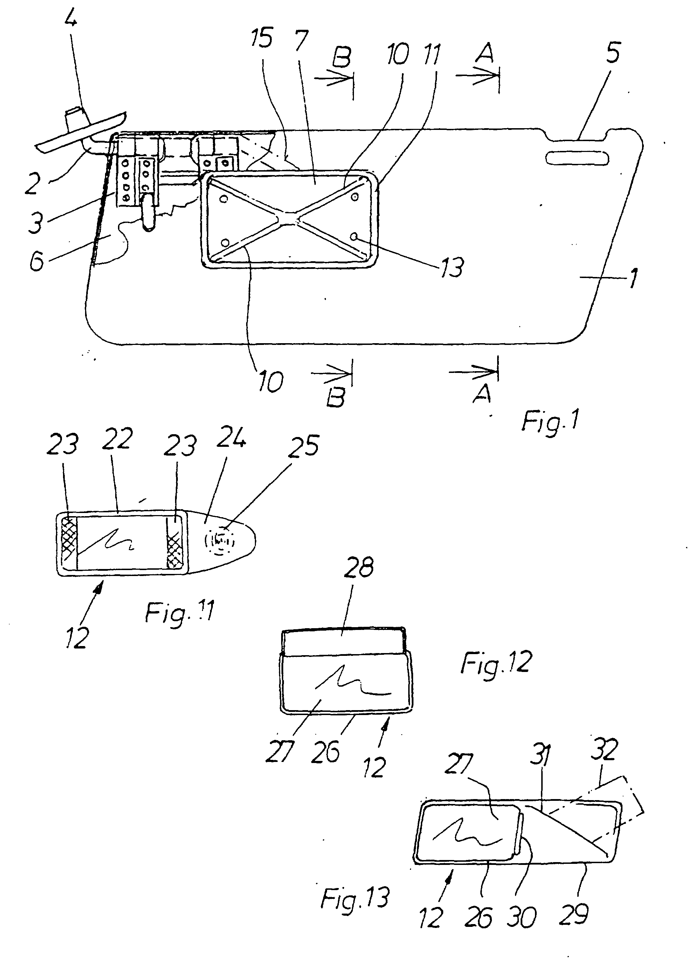

- Fig. 1: eine Sonnenblende, teilweise aufgebrochen dargestellt, in Ansicht
- Fig 2: einen Schnitt A - A nach Fig. 1,
- Fig. 3: einen Schnitt B - B nach Fig. 1,
- Fig. 4: einen teilweise aufgebrochen dargestellten Endbereich eines Sonnenblendenkörpers in Explosivdarstellung,
- Fig. 5: einen Schnitt C - C nach Fig. 4,
- Fig. 6: einen Schnitt C - C nach Fig. 4 mit einem von dem nach Fig. 5 abweichenden Ergänzungsbauteil,
- Fig. 7: eine Einzelheit des Sonnenblendenkörpers,
- Fig. 8: einen Schnitt D - D nach Fig. 7,
- Fig. 9: eine gegenüber Fig. 7 abgewandelte Einzelheit des Sonnenblendenkörpers,
- Fig. 10: einen Schnitt E - E nach Fig. 9 und
- Fig. 11 bis 13: Ausführungsformen eines Ergänzungsbauteils.

Die Sonnenblende besteht aus einem Sonnenblendenkörper 1, einer Sonnenblendenachse 2, die mit einem Endbereich in ein im Sonnenblendenkörper 1 eingelagertes Lagergehäuse 3 eingreift und mit dem anderen Endbereich von einem Lagerböckchen 4 aufgenommen ist sowie aus einem Gegenlagerböckchen (nicht gezeigt) zur lösbaren Halterung eines am Sonnenblendenkörper 1 ausgebildeten Gegenlagerstifts 5.

Der Sonnenblendenkörper 1 ist als hohler Blasformkörper ausgebildet, wobei der Gegenlagerstift 5 einen einstückigen und materialeinheitlichen Bestandteil des Sonnenblendenkörpers 1 bildet. In einem Eckbereich des Sonnenblendenkörpers 1 ist das lagergehäuse 3 eingelagert, und zwar innerhalb des Hohlraums 6, wobei unter eingelagert auch eine Verankerung zu verstehen ist.

An einer Breitseite weist der Sonnenblendenkörper 1 eine wannenförmige Vertiefung 7 mit einem Boden 8 und mit umlaufenden Seitenwänden 9 auf. Im Boden 8 sind zwei diagonal verlaufende und sich mittig kreuzende Versteifungssicken 10 ausgebildet, die sich an der Innenwandung der benachbarten Breitseite zumindest abstützen. Bevorzugt ist eine stoffschlüssige Verbindung vorgesehen, die sich durch die Formgebungswärme beim Blasformen des Sonnenblendenkörpers 1 ohne besonderes Dazutun ergibt. Im Boden 8 der wannenförmigen Vertiefung 7 befinden sich ferner Löcher 13. Der Boden 8 ist von der benachbarten Breitseite des Sonnenblendenkörpers 1 beabstandet. Die Seitenwände 9 der wannenförmigen Vertiefung 7 sind mit einem durch einen stufenförmigen Absatz gebildeten umlaufenden Auflageflansch 11 ausgeführt. Dadurch wird eine zusätzliche Versteifung des Sonnenblendenkörpers 1 erzielt und eine Auflage für ein noch zu erläuterndes Ergänzungsbauteil 12 geschaffen.

Eine Seitenwand 9 der wannenförmigen Vertiefung 7 weist eine zu öffnende Zone 14 und zwischen dieser Zone 14 und der Lagerbohrung des Lagergehäuses 3 erstreckt sich ein Durchgangskanal zum Durchführen von elektrischen Versorgungsleitungen, wobei der Durchgangskanal aus einem rohrförmigen Ansatz 15 am Lagergehäuse 3 besteht.

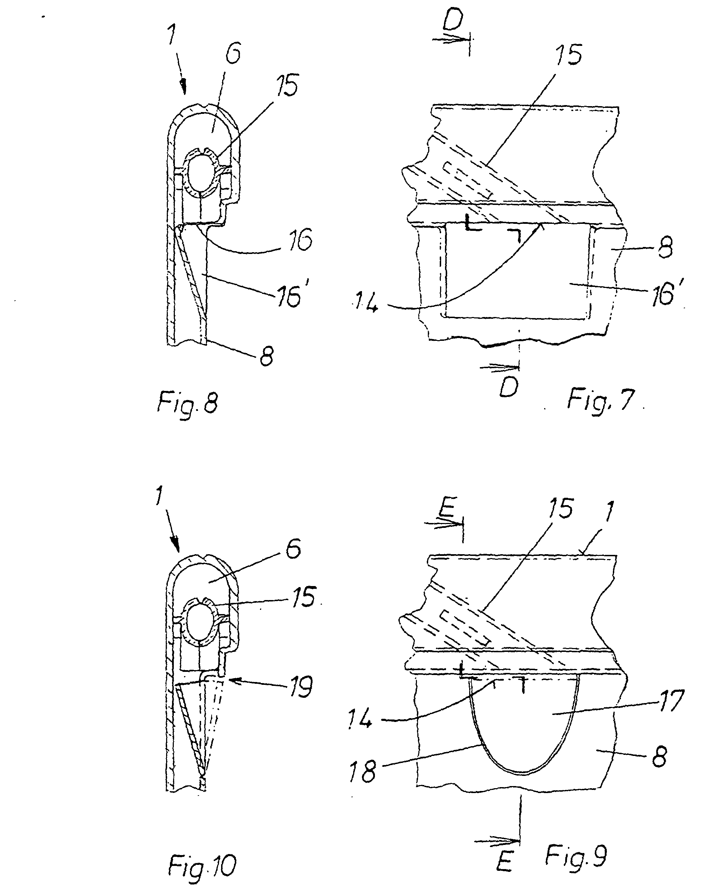

Die zu öffnende Zone kann gemäß Fig. 7 und 8 dadurch geschaffen werden, daß im Boden 8 örtlich eine taschenartige Mulde 16' ausgebildet wird. Aufgrund einer maßlichen Vorgabe im Werkzeug der Blasform entsteht eine dünne Schwimmhaut 16, die leicht durchstoßen werden kann.

Die zu öffnende Zone 14 kann gemäß Fig. 9 und 10 aber auch dadurch geschaffen werden, daß im Boden 8 örtlich eine Kalotte 17 angeformt ist, die an ihrem Umfang eine Materialverdünnung 18 aufweist. Durch Einschneiden der zu öffnenden Zone 14 entsteht ein Freischnitt 19, wodurch die Kalotte 17 durchgedrückt werden kann und aufgrund des Übertotpunkteffekts die ursprünglich nach außen gerichtete Wölbung nun bleibend nach innen gerichtet ist.

Die wannenförmige Vertiefung 7 dient aufgrund ihrer beschriebenen Ausbildung zur den technischen Anforderungen genügenden Aussteifung des Sonnenblendenkörpers 1 und, wie erwähnt auch dazu, ein Ergänzungsbauteil 12 aufzunehmen.

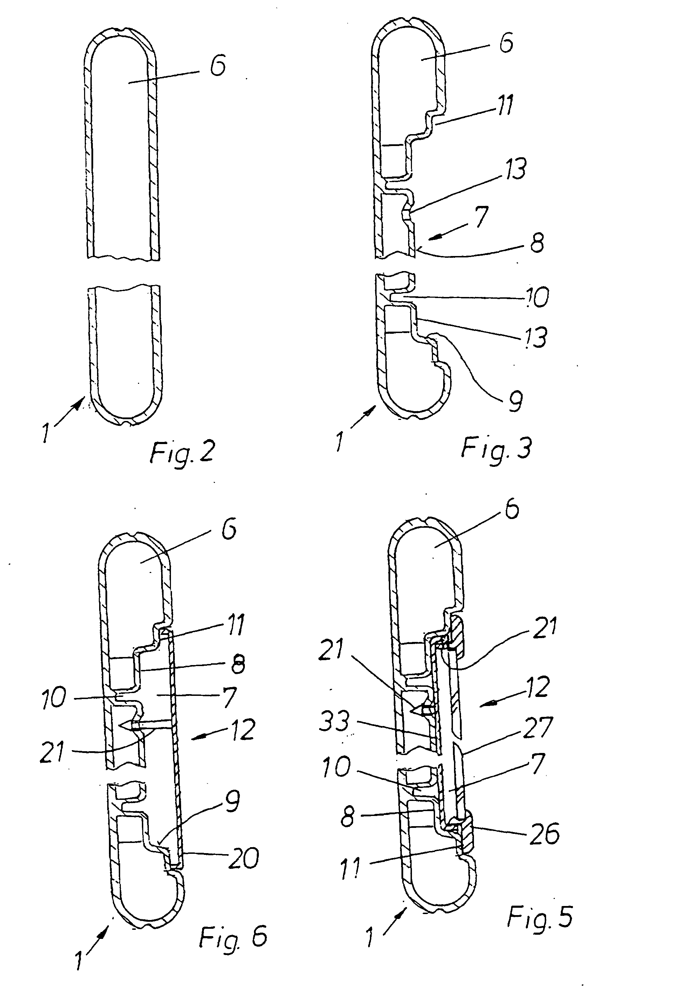

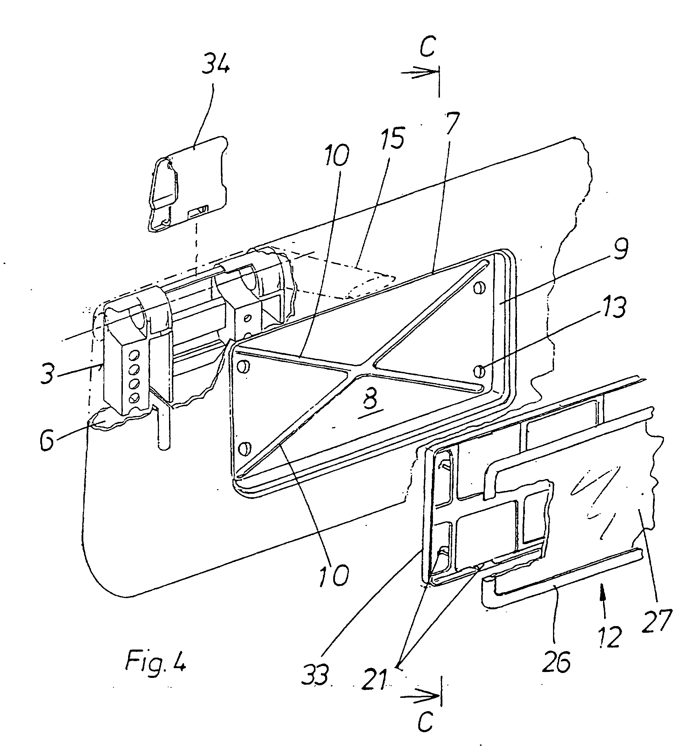

In der einfachsten, in Fig. 6 gezeigten Ausführungsform besteht das Ergänzungsbauteil 12 aus einem die Vertiefung 7 abdeckenden Verschlußdeckel 20, der sich mit seinem umlaufenden Rand auf dem Auflageflansch 11 abstützt und über harpunenartig ausgebildete Rastelemente 21, die die Löcher 13 durchsetzen, gehalten ist. Der Verschlußdeckel 20 kann dem Sonnenblendenkörper 1 farblich angepaßt sein oder auch eine Komplementärfarbe ebenso aufweisen, wie ein Firmenlogo oder eine wie auch immer geartete Verzierung, so daß der Verschlußdeckel 20 ohne weiteres zum guten Aussehen der Sonnenblende beitragen kann.

Fig. 11 zeigt ein als eine Spiegelbaueinheit 22 ausgebildetes Ergänzungsbauteil 12, wobei durch Linsen 23 verdeutlicht ist, daß diese Spiegelbaueinheit 22 mit einer elektrischen Beleuchtungseinrichtung, deren Ausbildung zum Stand der Technik gehört, ausgerüstet ist. An einer Gehäuseverlängerung 24 ist ein Firmenlogo 25 angebracht.

Fig. 12 zeigt als Ergänzungsbauteil 12 einen von einem Rahmen 26 eingefaßten Spiegel 27, wobei am Rahmen 26 ein Klappdeckel 28 zum Abdecken des Spiegels 27 angelenkt ist.

Fig. 13 zeigt ein Ergänzungsbauteil 12 mit einem von einem Rahmen 26 eingefaßten Spiegel 27, wobei am Rahmen 26 eine Verlängerung 29 angeordnet ist. Die Verlängerung 29 nimmt eine Schieberabdeckung 30 für den Spiegel 27 auf und kann in einem schräg verlaufenden Öffnungsschlitz 31 einen Parkschein 32 oder dgl. aufnehmen.

In den Fig. 4 und 5 ist ein von einem Rahmen 26 gehaltener Spiegel 27 mittels Hilfe eines Adapterrahmens 33 in der wannenförmigen Vertiefung 7 aufgenommen. Der Adapterrahmen 33 weist unterseitig angeformte Rastelemente 21 auf, die auf das Lochbild im Boden 8 abgestimmt sind, wie auch oberseitig angeformte Rastelemente 26 auf, die auf Befestigungsöffnungen im Rahmen 26 abgestimmt sind. In diesem Fall wird davon ausgegangen, daß es sich bei dem Ergänzungsbauteil 12 um ein bei herkömmlichen Sonnenblenden bereits zum Einsatz kommendes Standardbauteil handelt.

## Patentansprüche

1. Sonnenblende für Fahrzeuge mit einem hohlen, als Blasformkörper ausgebildeten Sonnenblendenkörper (1), der eine annähernd rechteckige Form aufweist und in einem Eckbereich ein eingelagertes Lagergehäuse (3) mit einer Lagerbohrung für die einendige Lagerung einer anderendig von einem Lagerböckchen (4) aufgenommenen Sonnenblendenachse (2) trägt, welche von einer vom Lagergehäuse (3) aufgenommenen Rastfeder (34) geklemmt wird, der weiterhin am dem Lagergehäuse (3) abgewandten Endbereiche einen mit der Sonnenblendenachse (2) eine Klappachse bildenden Gegenlagerstift (5) aufweist, der ferner an einer Breitseite mit einer wannenförmigen Vertiefung (7) zur Aufnahme eines Ergänzungsbauteils (12), wie eine Spiegelbaueinheit (22) ausgebildet ist und der schließlich mit Versteifungssicken (10) versehen ist, **dadurch gekennzeichnet, daß** die Seitenwände (9) der wannenförmigen Vertiefung (7) mit einem durch einen stufenförmigen Absatz gebildeten umlaufenden Auflageflansch (11) ausgeführt sind, daß die Versteifungssicken (10) ausschließlich im Boden (8) der wannenförmigen Vertiefung (7) angeordnet sind und sich an der Innenwandung der benachbarten Breitseite des Sonnenblendenkörpers (1) abstützen und daß sich im Boden (8) der wannenförmigen Vertiefung (7) Löcher (13) zur Aufnahme von Befestigungselementen (21) des Ergänzungsbauteils (12) befinden.

2. Sonnenblende nach Anspruch 1, **dadurch gekennzeichnet, daß** die Versteifungssicken (10) stoffschlüssig mit der Innenwandung der benachbarten Breitseite des Sonnenblendenkörpers (1) verbunden sind.

3. Sonnenblende nach Anspruch 1 oder 2, **dadurch gekennzeichnet, daß** eine Seitenwand (9) der wannenförmigen Vertiefung (7) eine zu öffnende Zone (14) aufweist und daß sich zwischen dieser Zone (14) und der Lagerbohrung des Lagergehäuses (3) ein Durchgangskanal zum Durchführen von elektrischen Versorgungsleitungen erstreckt.

4. Sonnenblende nach Anspruch 3, **dadurch gekennzeichnet, daß** der Durchgangskanal aus einem rohrförmigen Ansatz (15) am Lagergehäuse (3) besteht.

5. Sonnenblende nach wenigstens einem der Ansprüche 1 bis 4, **dadurch gekennzeichnet, daß** das in der wannenförmigen Vertiefung (7) aufgenommene Ergänzungsbauteil (12) ein Verschlußdeckel (20), ein von einem Rahmen (26) eingefaßter Spiegel (27) oder eine ggf. mit einer elektrischen Beleuchtungseinrichtung ausgebildete Spiegelbaueinheit (22) ist.

6. Sonnenblende nach Anspruch 4, **dadurch gekennzeichnet, daß** der Verschluß (20), der Rahmen (26) oder die Spiegelbaueinheit (22) mit rückseitig angeordneten Verankerungselementen (21) zum Eingreifen in die im Boden (8) der wannenförmigen Vertiefung (7) vorgesehenen Löcher (13) versehen sind.

7. Sonnenblende nach Anspruch 5, **dadurch gekennzeichnet, daß** für die Halterung des Ergänzungsbauteils (12) ein Adapterrahmen (33) mit ober- und unterseitig angeordneten Befestigungselementen (21) vorgesehen ist.

## Claims

1. Sun visor for vehicles having a hollow sun visor body (1) which is designed as a blow-moulded body and has an approximately rectangular shape and bears, in a corner region, an embedded bearing housing (3) having a bearing hole for the mounting, at one end, of a sun visor spindle (2) which is held at the other end by a small bearing bracket (4) and is clamped in place by a latching spring (34) held by the bearing housing (3), the sun visor body furthermore having, at the end region facing away from the bearing housing (3), a counter-bearing pin (5) forming a folding axis, the said sun visor spindle also being designed on a wide side with a trough-shaped depression (7) for accommodating a supplementary component (12), such as a mirror module (22), and the said sun visor body finally being provided with stiffening beads (10), **characterized in that** the side walls (9) of the trough-shaped depression (7) are designed with a peripheral supporting flange (11) formed by a step-shaped shoulder, **in that** the stiffening beads (10) are arranged exclusively in the bottom (8) of the trough-shaped depression (7) and are supported on the inner wall of the adjacent wide side of the sun visor body (1), and **in that** holes (13) for receiving fastening elements (21) of the supplementary component (12) are located in the bottom (8) of the trough-shaped depression (7).

2. Sun visor according to Claim 1, **characterized in that** the stiffening beads (10) are connected to the inner wall of the adjacent wide side of the sun visor body (1) with a cohesive material joint.

3. Sun visor according to Claim 1 or 2, **characterized in that** one side wall (9) of the trough-shaped depression (7) has a zone (14) which can be opened, and **in that** a through-channel for leading through electric supply lines extends between this zone (14) and the bearing hole of the bearing housing (3).

4. Sun visor according to Claim 3, **characterized in that** the through-channel comprises a tubular projection (15) on the bearing housing (3).

5. Sun visor according to at least one of Claims 1 to 4, **characterized in that** the supplementary component (12) accommodated in the trough-shaped depression (7) is a closure cover (20), a mirror (27) held by a frame (26) or a mirror module (22) designed, if appropriate, with an electric illumination device.

6. Sun visor according to Claim 4, **characterized in that** the closure cover (20), the frame (26) or the mirror module (22) are provided with anchoring elements (21) which are arranged on the rear side and are intended for engaging in the holes (13) provided in the bottom (8) of the trough-shaped depression (7).

7. Sun visor according to Claim 5, **characterized in that** an adapter frame (33) is provided with fastening elements (21) arranged on the upper and lower sides, for the securing of the supplementary component (12).

## Revendications

1. Pare-soleil pour véhicules, comprenant un corps de pare-soleil (1) réalisé en tant que corps creux moulé par soufflage, qui présente une forme approximativement rectangulaire et qui porte, dans une partie de coin, un logement de palier intégré (3) avec un alésage de palier pour le support à une extrémité d'un axe de pare-soleil (2) reçu à l'autre extrémité par un coussinet (4), lequel axe de pare-soleil est serré par un ressort d'encliquetage (34) reçu par le logement de palier (3), lequel ressort présente en outre, au niveau de la partie d'extrémité opposée au logement de palier (3) une tige conjuguée (5) formant un axe de rabattement avec l'axe du pare-soleil (2), laquelle tige est en outre réalisée sur un côté large avec un renfoncement (7) en forme de cuvette pour recevoir un composant complémentaire (12), tel qu'une unité de miroir (22), et qui est finalement pourvue de moulures de renforcement (10), **caractérisé en ce que** les parois latérales (9) du renfoncement (7) en forme de cuvette sont réalisées avec une bride d'appui (11) périphérique formée par un retrait en forme de gradin, **en ce que** les moulures de renforcement (10) sont disposées exclusivement dans le fond (8) du renfoncement (7) en forme de cuvette et s'appuient sur la paroi interne du côté large adjacent du corps de pare-soleil (1) et **en ce que** des trous (13) pour recevoir des éléments de fixation (21) du composant complémentaire (12) se trouvent dans le fond (8) du renfoncement (7) en forme de cuvette.

2. Pare-soleil selon la revendication 1, **caractérisé en ce que** les moulures de renforcement (10) sont raccordées par liaison de matière à la paroi interne du côté large adjacent du corps de pare-soleil (1).

3. Pare-soleil selon la revendication 1 ou 2, **caractérisé en ce qu'**une paroi latérale (9) du renfoncement (7) en forme de cuvette présente une zone (14) à ouvrir et **en ce qu'**un conduit de passage s'étend entre cette zone (14) et l'alésage de palier du logement de palier (3), pour le guidage des lignes d'alimentation électrique.

4. Pare-soleil selon la revendication 3, **caractérisé en ce que** le conduit de passage se compose d'une pièce en saillie de forme tubulaire (14) sur le logement de palier (3).

5. Pare-soleil selon au moins l'une des revendications 1 à 4, **caractérisé en ce que** le composant complémentaire (12) reçu dans le renfoncement (7) en forme de cuvette est un couvercle de fermeture (20), un miroir (27) monté dans un cadre (26) ou une unité de miroir (22) éventuellement réalisée avec un dispositif d'éclairage électrique.

6. Pare-soleil selon la revendication 4, **caractérisé en ce que** la fermeture (20), le cadre (26) ou l'unité de miroir (22) sont pourvus d'éléments d'ancrage (21) disposés à l'arrière, pour venir en prise dans les trous (13) prévus dans le fond (8) du renfoncement (7) en forme de cuvette.

7. Pare-soleil selon la revendication 5, **caractérisé en ce que** pour le maintien du composant complémentaire (12), on prévoit un cadre d'adaptateur (33) avec des éléments de fixation (21) disposés en haut et en bas.
